# EUROPEAN PATENT APPLICATION

(11) **EP 4 625 359 A1**
(43) Date of publication of application: **01.10.2025**
(21) Application number: 24167274.0
(22) Date of filing: 28.03.2024
(51) Int. Cl.: G06V 20/52, G06V 20/59, B64F 5/60, B64D 45/00

(54) **CABIN SEARCH SUPPORT SYSTEM FOR AIRCRAFT COMPARTMENTS**

(71) Applicant: Airbus Operations GmbH, 21129 Hamburg (DE)
(72) Inventor: Mehrholz, Holger, 21129 Hamburg (DE)

(57) **Abstract**

The present invention relates to a cabin search support system (10) for aircraft compartments (1). This system (10) comprises at least one camera unit (2) and a system control unit (3) with a screen unit (4) for displaying image data from the at least one camera unit (2). The at least one camera unit (2) and the system control unit (3) with screen unit (4) are connected to each other and spaced apart by means of a connecting element (5). The system control unit (3) comprises a system program which is designed to compare in real time image data from the at least one camera unit (2) with user-defined reference data stored in the system program, so that the image data can be displayed on the screen unit (4) in a form processed by the system program depending on the result of the comparison.

## Description

### TECHNICAL FIELD OF THE INVENTION

The present invention pertains to a cabin search support system for aircraft compartments.

### TECHNICAL BACKGROUND

Before an aircraft, for example a passenger plane, is ready for its next flight, various routine measures and standard procedures must be carried out on the ground. This applies to measures and standard procedures outside the aircraft as well as measures and standard procedures that take place inside the aircraft, for example in the aircraft compartment.

The security search is one measure among others that operators have to comply with due to requirements from the regulators. The operators must perform security "Checks" and "Searches" inside and outside the aircraft to ensure the integrity of the aircraft.

In this context, the most difficult and time-consuming checks and searches are the ones applying to areas where it is difficult to get reliable visibility or where visibility is limited. An example area for such a difficulty is the area under seats in the aircraft compartments, where every seat needs to be inspected.

Typical objects to be searched are in general dangerous objects (explosives, knives, weapons etc.) but also contraband items like objects of value, drugs, counterfeits or any other illegal items.

Today, the security checks and searches are mainly performed by visual inspection. Even if this current procedure is time-consuming, it can be assumed that today's checks are carried out reliably and safely.

Improvements could be made here, for example in the form of devices that support the respective staff in security searches, so that the measures to be carried out can be further accelerated.

### SUMMARY OF THE INVENTION

Against this background, it is an object of the present invention to provide a technical solution which can be used to support a cabin search, so that the search can be carried out more time efficiently and therefore more cost-effectively.

This object is achieved by a cabin search support system having the features of claim 1, and a use of the cabin search support system having the features of claim 15.

According to the invention, a cabin search support system comprises at least one camera unit and a system control unit with a connected screen unit for displaying image data from the at least one camera unit, wherein the at least one camera unit and the system control unit with the connected screen unit are connected to each other and spaced apart by means of a connecting element. The system control unit comprises a system program which is designed to compare in real time image data from the at least one camera unit with user-defined reference data stored in the system program, so that the image data can be displayed on the screen unit in a form processed by the system program depending on the result of the comparison.

Areas that are difficult to see can be viewed in this way without a person having to kneel down, since the spaced camera unit can provide image data to these areas, which can then be viewed by a person using the screen unit.

A typical camera unit can comprise at least all the resources necessary for the creation of image data, as well as additional components such as a specially shaped housing and so on.

The user-defined reference data can, for example, include any images that represent an empty area under seats within a cabin compartment of an aircraft.

Due to the comparison that can be carried out using the system presented, any changes in this area can then be shown. This includes objects of any kind that have obviously been left lying around in this area, as well as comparatively minor changes in circumstances, for example caused by a package stuck under the seats or the like, which is not part of the standard equipment for these seats.

Using the system program, the recorded image data, for example in the form of a video stream or the like, can then be processed based on the comparison in such a way that a person can be given an indirect or even a direct indication of these changed circumstances.

However, it is also conceivable that the system, for example, presents the processed data via the screen unit without changing the recorded real scenario.

This can be the case, for example, if an area under a seat has no special features, i.e. no specific changes can be detected.

The innovative cabin search support system, which can also be called cabin search support tool, is not replacing the visual check by human eyes, but it will support the searches to be carried out. The reliability of the cabin search can be significantly improved by supporting image processing according to the present invention. The presented system can provide an advantageous benefit, particularly in areas that are difficult to see or when recognizing ambiguous situations.

As the invented system can reduce efforts for visual checks in difficult areas, the cabin search time and hence the turnaround time can be reduced.

The system control unit with the connected screen unit can, for example, be designed to form a single unit. In this respect, these two technical units form a common building group with a corresponding connection between them within this common building group.

However, it is also conceivable that these two technical units stand alone and are therefore separate units which are connected. In this context, the screen unit could also be a screen unit of a complex external unit. For example, this could be a screen unit from a mobile device or the like.

Any connection can be provided between the system control unit and the screen unit depending on the technical possibilities. This applies to any constellation between these units. It is conceivable that overall it can be a type of radio connection as well as a fixed connection via a connecting line or even connecting lines. Any hybrid form is also conceivable.

If the screen unit is a single unit, it can also be a screen unit with a correspondingly integrated system control unit. The reversed situation is also conceivable. If it is a stand-alone screen unit, appropriate interfaces can be provided which are designed to connect this screen unit to a corresponding system control unit.

Further according to the invention, a use of the inventive system to support a cabin search in an aircraft compartment is presented.

The previously mentioned advantages apply equally to the presented use of the system.

Thus, one idea of the present invention is to support cabin search activities. A camera unit, for example moveable, is monitoring difficult areas, e. g. the area under the passenger seats. The screen unit (display unit) of the system is showing, for example, the real time video from the camera unit. Due to the comparison with user-defined reference data, the captured video stream can be analyzed in parallel. In case of an abnormal finding, these data can be shown in a processed manner using the system program on the screen unit to ensure that it is not missed by an inspector. The user-defined reference data can be provided, for example, using any computer vision Al algorithm or something similar. In a simpler form, only manually assigned data can be provided.

Advantageous embodiments and improvements of the present invention are found in the subordinate claims.

According to an embodiment of the invention, the at least one camera unit is selected from: High-definition digital camera unit, thermal imaging camera unit, high-definition digital camera unit with additional functions of a thermal imaging camera unit.

Image data, provided by the high-definition digital camera unit, is particularly advantageous in order to carry out a comparison with reference data that is as accurate as possible. Using the system presented, it is then possible to display the processed data consistently and reliably depending on this accurate comparison.

The use of thermal imaging camera units or their function is always advantageous when the system is used in darker areas of the aircraft compartment and objects with special properties that can be displayed using thermal imaging data are to be found.

The term *"high-definition"* is intended here as a generic term to include any resolution settings that are technically feasible using this technology. In other words, it is conceivable that resolutions of the camera units used and the corresponding video image thereof can be provided in different high resolutions that are advantageous for use.

According to another embodiment of the invention, the system further comprises an infrared illumination device.

In dark areas of the aircraft compartment, additional lighting on the system can advantageously support a reliable use of the system. The system can, for example, be designed to be switchable by the user when using the infrared illumination device in a kind of "night mode". Remaining components, such as the screen unit and the circuits and setting options associated with it, can be adoptable according to this "night mode".

According to another embodiment of the invention, the infrared illumination device is arranged at least partially on or in the at least one camera unit.

The intended lighting can therefore be aimed particularly well at the areas to be captured by the camera unit. In addition, the system presented can be designed to be particularly compact in this way, which promotes user-friendliness with regard to use in the aircraft compartment.

According to an embodiment of the invention, the infrared illumination device is designed to be automatically activated depending on the lighting conditions currently surrounding the system.

Automation in the sense of this embodiment presented promotes the provision of accurate image data, since the system activates the correct settings in real time in order to deliver the best possible image data from the aircraft compartment in real time for the technical implementation of the image comparison.

In some embodiments of the inventions, the system program is designed to classify the image data according to the comparison, so that the image data can be displayed on the screen unit in a form processed by the system program depending on the classifying.

The representation of the processed data depending on the classification result can be carried out in a variety of ways. For example, respective image data on the screen unit can be displayed with different brightness depending on the classification, or the like.

Depending on the classification result, certain image data can also be displayed in higher resolution, so that certain objects recorded using the camera unit can be displayed more clearly on the screen unit. Personnel who use the system for cabin search are thus advantageously supported in the demanding task, as the image data is already prepared in a processed form, depending on the classification. The processed image data directs the focus of the personnel therefore to objects that need to be particularly examined, so that a faster cabin search can be performed.

According to another embodiment of the invention, the system program is further designed to release at least one alarm routine depending on the classifying.

Depending on the classification result, an appropriate alarm can be triggered, so that only in special cases a user might have to carry out further activities to ensure a successful cabin search. In this way, the technical system makes a valuable contribution to reducing the time spent searching for a cabin.

According to another embodiment of the invention, the alarm routine is selected from: outputting at least one visual alarm signal using visual alarm means of the screen unit; outputting at least one acoustic alarm signal using acoustic alarm means of the screen unit, providing at least one visual layer on the screen unit depending on the classifying, so that image data can at least partially be highlighted.

A visual alarm signal can be provided in the form of a displayed symbol or lettering. An acoustic alarm signal can be provided in the form of a specific signal tone. The use of visual layers can, for example, be provided in such a way that, depending on the classification, a respective colored border can be implemented for objects captured by the camera unit.

In other words, respective objects can be displayed with a respective colored border. Depending on the color, the person using the system can then assess whether further control measures are necessary. The attention of a person using the system can thus be directed by means of the system in order to examine only really critical or important detected objects in more detail. Unnecessary time spent searching for a cabin can thus be avoided.

According to another embodiment of the invention, the system control unit is designed to storage the image data processed by the system program in a user-defined manner.

The secured image data can therefore be made available for later documentation purposes, so that the system presented here can be used advantageously for another important task in the cabin search. For example, the image data can thus be available for the appropriate continuation of a logbook of the aircraft. The image data thus secured can also serve as possible evidence.

According to another embodiment of the invention, the stored and processed image data can be user-defined or automatically provided to a higher-level computing unit in the aircraft compartment.

A link to other systems within the aircraft compartment is therefore possible in an advantageous manner.

According to another embodiment of the invention, the user-defined reference data are additionally provided using machine learning methods stored in the system program.

This makes it possible to provide a self-improving system that continually learns during use and can be used even more advantageously. For example, it can be provided that user-defined reference data is initially stored in the system program, which shows the respective areas of the aircraft compartment in standard mode, i.e. only with the components (Seats, partition walls etc.) intended after the aircraft has been completed.

If the system recognizes actual components of the aircraft as foreign objects due to small deviations in structural dimensions, these cases can be classified accordingly in a user-defined manner by a person operating the system.

After a few such cases were carried out to adjust the system, the existing machine learning methods are now able to independently evaluate further incorrect classifications. This means that slight structural deviations within aircraft compartments, due to manners of different airlines customizing the aircraft compartment, can be better consistently evaluated by the system presented and more reliable comparisons and representations of the processed image data are possible.

According to another embodiment of the invention, the system program is further designed to classify the image data according to the comparison using the user-defined reference data for object recognition routines in combination with machine learning methods stored in the system program.

A self-learning system can therefore be continuously improved over a period of use, so that an even more advantageous application of the system can be provided.

Starting from the first objects captured by the camera unit, a user can therefore carry out the first classification steps manually and then train the stored machine learning methods in such a way that a machine-based classification of subsequent cases is then possible.

The technical comparison of captured image data with reference data can therefore be carried out even faster and more reliably, since not all small deviations have to be stored in the system program with the respective reference images.

It is sufficient if there is a standard object as a reference image for each object. User-defined classification steps are then sufficient to train the machine learning methods, which can be based on or represented by the usual standard algorithms for image processing in combination with machine learning methods for image recognition procedures, so that a technically required comparison of the image data can be carried out.

According to another embodiment of the invention, the connecting element comprises means designed to space the at least one camera unit apart from the system control unit with the connected screen unit in a user-defined adjustable manner so that a minimum distance between these units of at least 0.1 m can be set, more preferable of at least 0,2 m, more preferable of at least 0,3 m, more preferable of at least 0,4 m, more preferable of at least 0,5 m.

Depending on the intended use, the system can be advantageously provided in this way, so that comfortable operation supports a safe cabin search.

According to another embodiment of the invention, the at least one camera unit or at least one part of the at least one camera unit is designed to be moved in a user-defined manner according to at least one position relative to a position of the system control unit or according to a position of at least one object that is in the detection range of the at least one camera unit.

A camera unit that can be moved in this way can therefore be advantageously used during the cabin search in areas that are difficult to see. A position, a distance angle, a respective lens setting and/or a respective distance to the filmed object can be adjusted so that areas to be filmed can be clearly and unambiguously recorded, which makes the subsequent technical comparison with the reference data easier and leads to more conclusive results.

### BRIEF SUMMARY OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other.

The present invention is explained in more detail below with reference to the embodiments shown in the schematic figures:
- Fig. 1: shows a schematically illustrated cabin search support system when used in an aircraft compartment;
- Fig. 2: shows screen units of the cabin search support system in different application scenarios;
- Fig. 3: shows a screen unit of the cabin search support system with an illustration of processed image data.

In the figures of the drawing, elements, features and components which are identical, functionally identical and of identical action are denoted in each case by the same reference designations unless stated otherwise.

### DESCRIPTION OF EXEMPLARY EMBODIMENTS

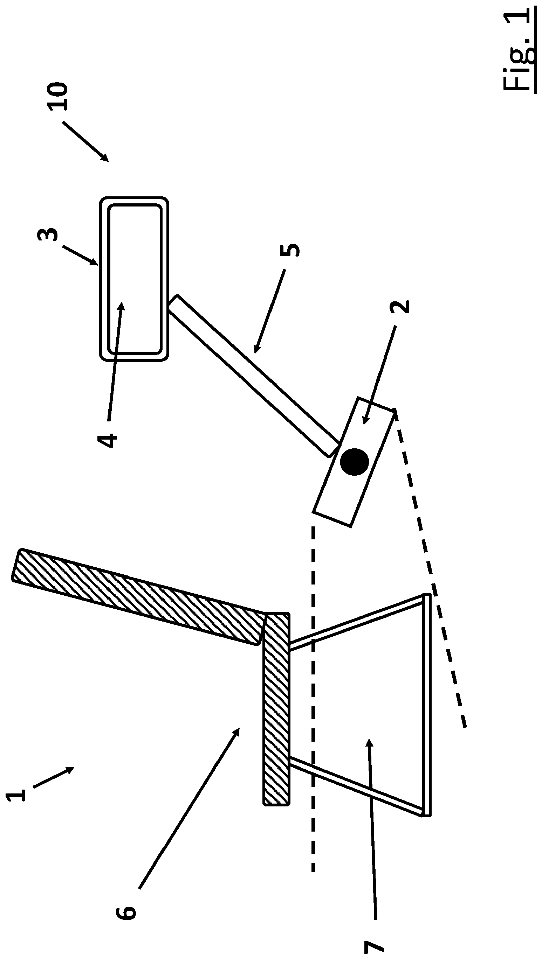

Fig. 1 shows a schematically illustrated cabin search support system 10 when used in an aircraft compartment 1. A camera unit 2 is shown in detail, which is connected to a system control unit 3 with a connected screen unit 4 by means of a connecting element 5 belonging to the system 10.

The system control unit 3 with the connected screen unit 4 can, for example, be designed to form a single unit. In this respect, these two technical units form a common building group with a corresponding connection between them within this common building group.

However, it is also conceivable that these two technical units stand alone and are therefore separate units which are connected. In this context, the screen unit 4 could also be a screen unit 4 of a complex external unit. For example, this could be a screen unit 4 from a mobile device or the like.

Any connection can be provided between the system control unit 3 and the screen unit 4 depending on the technical possibilities. This applies to any constellation between these units. It is conceivable that overall it can be a type of radio connection as well as a fixed connection via a connecting line or even connecting lines. Any hybrid form is also conceivable.

If the screen unit 4 is a single unit, it can also be a screen unit 4 with a correspondingly integrated system control unit 3. The reversed situation is also conceivable. If it is a stand-alone screen unit 4, appropriate interfaces can be provided which are designed to connect this screen unit 4 to a corresponding system control unit 3.

The system control unit 3 comprises a system program (not shown in detail) which is designed to compare in real time image data from the at least one camera unit 2 with user-defined reference data stored in the system program, so that the image data can be displayed on the screen unit 4 in a form processed by the system program depending on the result of the comparison.

The camera unit 2 is moveable in a user-defined manner according to at least one position relative to a position of the system control unit 3 or according to a position of at least one object that is in the detection range of the at least one camera unit 2. For these purposes, the camera unit 2 can have any means that a specialist would deem necessary for this use.

For example, an adapter unit (not shown) for coupling to the connecting element 5 can provide this mobility. Components of the camera unit 2 that are intended for the actual acquisition of image data, such as respective lenses or the like, can also be designed to be movable, so that the desired mobility of this camera unit 2 results.

In a very simple embodiment, the connecting element 5 can simply be a rod-like object that is designed to connect the respective components 2, 3 to one another. In the sense of a modular system, different lengths and thicknesses of such connecting elements 5 can be added to the system 10 (not shown in detail), so that a user can then use them depending on the location.

FIG. 1 shows a use of the cabin search support system 10, which provides a cabin search in an area under seats 6 in the aircraft compartment 1. Dashed lines in FIG. 1 illustrate a search area 7 that is to be examined in more detail using the cabin search support system 10 presented.

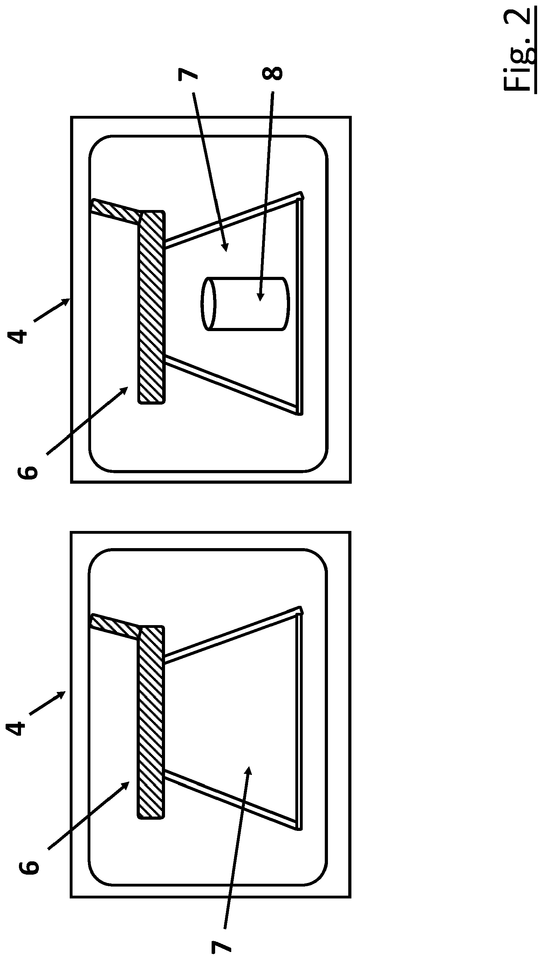

Fig. 2 shows screen units 4 of the cabin search support system 10 in different application scenarios.

Relative to the image plane, the screen unit 4 shown on the left shows the search area 7 according to FIG. 1 under the seat 6, with no further objects being present in the search area 7. Such images can be stored as reference image material in a user-defined manner in the system program of the cabin search support system10.

The planned comparison of this data would therefore not lead to any further actions. Even after processing, the image data to be processed would only result in an image of the search area 7 - similar to a mirror function.

However, the scenario shown on the right in relation to the image plane differs from the first scenario on the left. Here, in the search area 7, an object 8 is shown in the form of a schematically illustrated cylinder. The object can be, for example, an explosive object, a knife, a weapon or the like. The object 8 could also be any contraband item, like objects of value, drugs, counterfeits or any other illegal items.

However, it could just as easily be an abandoned drinks can, crumpled paper or something similar.

In a simple embodiment of the cabin search support system 10 presented, the comparison to be carried out with reference data stored in the system program only provides processed image data that indicates that there are abnormalities in the search area 7.

This can be the case, for example, if parts of a life jacket that is stowed under the seat hang down unplanned. This can also be the case if there are general objects in the search area 7, i.e. the search area 7 does not represent a brand-new aircraft compartment 1.

In a further embodiment of the presented cabin search support system 10 it can be provided that in the system program machine learning methods are stored so that the user-defined reference data are additionally provided using these stored methods.

The system program could further be designed to classify the image data according to the comparison using the user-defined reference data for object recognition routines in combination with machine learning methods stored in the system program.

It is therefore conceivable that a user of the cabin search support system 10 presented would qualify the reference data, the comparison and, accordingly, the machine learning methods in such a way that hanging parts of a life jacket will be recognized as such by the cabin search support system 10 in the future and the image data will be processed accordingly. If alarm routines were to be triggered, no alarm would be triggered.

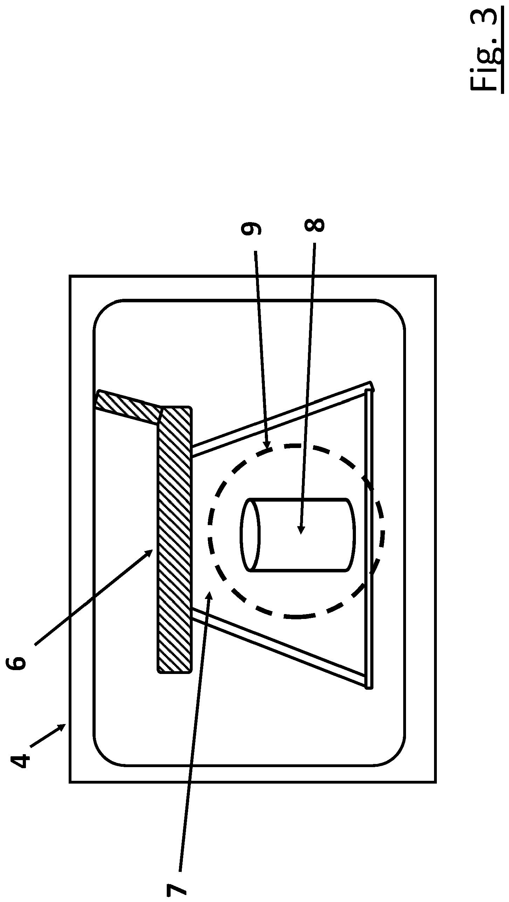

Fig. 3 shows a screen unit 4 of the cabin search support system 10 with an illustration of processed image data.

The recognized object and the object that does not belong there according to the comparison carried out with the reference data can be displayed on the screen unit 4 with a border 9 using the cabin search support system 10 presented.

In the form shown in FIG. 3, this border 9 is only shown in the form of an essentially circular and dashed line. However, it is conceivable that this line can also be provided in any color and according to an external contour of the object to be highlighted.

### LIST OF REFERENCE SIGNS

- 1: vehicle compartment
- 2: camera unit
- 3: system control unit
- 4: screen unit
- 5: connecting element
- 6: seat
- 7: search area
- 8: object
- 9: border
- 10: cabin search support system

## Claims

1. Cabin search support system (10) for aircraft compartments (1) comprising at least one camera unit (2) and a system control unit (3) with a connected screen unit (4) for displaying image data from the at least one camera unit (2), wherein the at least one camera unit (2) and the system control unit (3) with the connected screen unit (4) are connected to each other and spaced apart by means of a connecting element (5) and
wherein the system control unit (3) comprises a system program which is designed to compare in real time image data from the at least one camera unit (2) with user-defined reference data stored in the system program, so that the image data can be displayed on the screen unit (4) in a form processed by the system program depending on the result of the comparison.

2. Cabin search support system (10) according to claim 1, wherein the at least one camera unit (2) is selected from: High-definition digital camera unit, thermal imaging camera unit, high-definition digital camera unit with additional functions of a thermal imaging camera unit.

3. Cabin search support system (10) according to claim 1 or claim 2, wherein the system (10) further comprises an infrared illumination device.

4. Cabin search support system (10) according to claim 3, wherein the infrared illumination device is arranged at least partially on or in the at least one camera unit (2).

5. Cabin search support system (10) according to one of the claims 3 to 4, wherein the infrared illumination device is designed to be automatically activated depending on the lighting conditions currently surrounding the system (10).

6. Cabin search support system (10) according to one of the claims 1 to 5, wherein the system program is designed to classify the image data according to the comparison, so that the image data can be displayed on the screen unit (4) in a form processed by the system program depending on the classifying.

7. Cabin search support system (10) according to claim 6, wherein the system program is further designed to release at least one alarm routine depending on the classifying.

8. Cabin search support system (10) according to claim 7, wherein the alarm routine is selected from: outputting at least one visual alarm signal using visual alarm means of the screen unit (4); outputting at least one acoustic alarm signal using acoustic alarm means of the screen unit, providing at least one visual layer on the screen unit (4) depending on the classifying, so that image data can at least partially be highlighted.

9. Cabin search support system (10) according to one of the claims 1 to 8, wherein the system control unit (3) is designed to storage the image data processed by the system program in a user-defined manner.

10. Cabin search support system (10) according to claim 9, wherein the stored and processed image data can be user-defined or automatically provided to a higher-level computing unit in the aircraft compartment (1).

11. Cabin search support system (10) according to one of the claims 1 to 10, wherein the user-defined reference data are additionally provided using machine learning methods stored in the system program.

12. Cabin search support system (10) according to one of the claims 6 to 11, wherein the system program is further designed to classify the image data according to the comparison using the user-defined reference data for object recognition routines in combination with machine learning methods stored in the system program.

13. Cabin search support system (10) according to one of the claims 1 to 12, wherein the connecting element (5) comprises means designed to space the at least one camera unit (2) apart from the system control unit (3) with the connected screen unit (4) in a user-defined adjustable manner so that a minimum distance between these units of at least 0.1 m can be set, more preferable of at least 0,2 m, more preferable of at least 0,3 m, more preferable of at least 0,4 m, more preferable of at least 0,5 m.

14. Cabin search support system (10) according to one of the claims 1 to 13, wherein the at least one camera unit (2) or at least one part of the at least one camera unit (2) is designed to be moved in a user-defined manner according to at least one position relative to a position of the system control unit (3) or according to a position of at least one object that is in the detection range of the at least one camera unit (2).

15. Use of the cabin search support system (10) according to one of the claims 1 to 14 to support a cabin search in an aircraft compartment (1).
